# EUROPEAN PATENT SPECIFICATION

(11) **EP 1 276 108 B1**
(45) Date of publication and mention of the grant of the patent: **26.10.2005**
(21) Application number: 02077246.3
(22) Date of filing: 10.06.2002
(51) Int. Cl.: G11B 27/00, G11B 27/034, G11B 27/30

(54) **Method for recording multimedia information on an optical disc**
Verfahren für das Aufzeichnen von Multimedia-Informationen auf eine optische Platte
Procédé d'enregistrement d'information multimédia sur un disque optique

(30) Priority: 20.06.2001 US 885577
(43) Date of publication of application: 15.01.2003
(73) Proprietor: EASTMAN KODAK COMPANY, Rochester, New York 14650 (US)
(72) Inventor: Loui, Alexander C., Eastman Kodak Company, P.L.S., Rochester, New York 14650-2201 (US); Cok, David Roy, Eastman Kodak Company, P.L.S., Rochester, New York 14650-2201 (US); Lo, Yawcheng, Eastman Kodak Company, P.L.S., Rochester, New York 14650-2201 (US)
(74) Representative: Haile, Helen Cynthia

(56) References cited:
- EP-A- 1 041 566
- WO-A-01/45102
- SUE CHASTAIN: "Graphics Software ..." INTERNET CITATION, [Online] 1 April 2000 (2000-04-01), pages 1-8, XP002246562 Retrieved from the Internet: <URL:http://graphicssoft.about.com/library /weekly/mprev00.htm> [retrieved on 2003-07-04]
- W.FASTENRATH: "Teure Freiheit" C'T, vol. 6, 1996, pages 250-251, XP002246563
- ANONYMOUS: "OnDVD" INTERNET CITATION, [Online] 19 February 2002 (2002-02-19), XP002246564 Retrieved from the Internet: <URL:http://www.dazzle.com> [retrieved on 2003-07-03]

## Description

The invention relates generally to the field of digital graphics albums, and more particularly to the authoring of a multimedia enabled disc comprising a multimedia digital graphics albums.

The use of digital cameras has increased in recent years. Accordingly, the volume of commercial and consumer held digital image files has also increased. Much like the problem of a closet full of shoe boxes of randomly held photographic prints, in the digital environment, there are computer "shoe boxes" full of randomly stored digital images. This leads to problems in locating and categorizing digital files, particularly digital files of graphical images, that is, digital graphics files.

A traditional photo album stores photographic prints. These photographic prints are placed in the album and often times annotated to identify particular information about the photographic print. An electronic photo album has been developed to store digital graphics images in a way similar to the traditional photo album. Eastman Kodak Company has developed digital graphic album applications, such as the Kodak Picture Page or the Kodak Memory Album software, which allows a user to organize digital graphics images into album pages. Typically, users organize images by date, time, places, subject, and so forth. The software may allow a user to annotate the digital graphics image by entering text or other information describing the digital graphics image.

Typically, traditional photo albums contain photographs taken by the owner/user, and perhaps some photographs taken by others. In contrast, an electronic photo album may contain digital graphics images from many sources other than the owner/user of the electronic photo album. For example, the digital graphics image might be taken with a digital camera, or it might be a photographic print scanned and converted to digital format. Alternatively, the digital graphics image might be created electronically, such as with a graphic software program or photo editing software program. There are private and commercial sources of digital graphics images, for example, stock photo agencies and shared photo resources such as the internet. Digital graphics images can be accessed via the internet, downloaded to a personal computer, and placed in a digital graphics album.

There are many options to organize and annotate digital graphics images in a digital graphics album. Digital graphic album software allows a user to do this manually. Though some software programs include features which provides some automation in the organization of the digital graphic images.

However, to provide a digital graphics album which is rich and full in its context and presentation, and to expand a viewer's enjoyment when viewing such an album, it may be desired to provide a multimedia digital graphics album. That is, it may be desired to include in a single digital graphics album, more than just digital still images and computer generated graphics. For example, it may be desired to include in the digital graphics album such items as video clips, audio clips, and voice annotations.

Further, it may be desired to transfer the digital graphics album to another digital media, for example a multimedia enabled disc, so that the album can be viewed using popular, commercially available consumer equipment, and can be played on a variety of consumer equipment, including consumer audiovisual equipment and a computer.

Still further, it may be desired to include PC-based software applications and/or digital images on the multimedia enabled disc containing the album, thereby providing a disc which is compatible both with a PC and consumer equipment.

Methods have been disclosed for multimedia authoring, however, the references are not directed to the authoring of multimedia digital graphics albums. For example, U.S. Patent No. 5,592,602, (Edmunds et al.) is directed to authoring tools for manipulating screen objects during the authoring of multimedia art. U.S. Patent No. 5,907,704 (Gudmundson et al.) is directed to a system for authoring interactive multimedia applications. U.S. Patent No. 5,515,490 (Buchanan et al.) is directed to a system and method for the automatic temporal formatting of multimedia documents.

Software applications are available for personal computers for multimedia authoring. For example, Ulead VideoStudio V5.0 provided by Ulead Systems Incorporated is described at www.ulead.com. This software application enables a user to create, for example, MPEG-2 output files from various input sources including digital video, JPEG still images, and audio MP3 and CD clips. This software application, however, does not automatically record the output files on an optical disc, nor does it produce, from the same input files, a plurality of different output files.

Prior art discloses a slide show generation software for generating slideshows which can be viewed on a TV with a DVD player see, for example,

graphicssoft.about.com. Accordingly, a need continues to exist for a system and method for the authoring of a multimedia digital graphics album which can be played on a variety of consumer equipment, including consumer audiovisual equipment and a personal computer. A need also continues to exist for a system and method for authoring a multimedia enabled disc which can comprise PC-based software applications and/or digital images compatible for a PC, and comprise a multimedia digital graphics album which can be played on a variety of consumer equipment.

An object of the present invention is to provide a system and method for the authoring of a multimedia digital graphics album.

Another object of the invention is to provide such a multimedia digital graphics album which can be played on a variety of consumer equipment.

A further object of the invention is to provide a multimedia enabled disc compatible for both a PC and a variety of consumer equipment.

A still further object of the invention is to provide a multimedia enabled disc which can comprise PC-based software applications and/or digital images compatible for a PC, and comprise a multimedia digital graphics album which can be played on a variety of consumer equipment.

These objects are given only by way of illustrative example. Thus, other desirable objectives and advantages inherently achieved by the disclosed invention may occur or become apparent to those skilled in the art. The invention is defined by the appended claims.

According to one aspect of the invention, there is provided a method of recording information on a recordable optical disc. The method comprises the steps of selecting a plurality of digital still images, selecting at least one audio clip, encoding the plurality of digital still images and the audio clip as a single MPEG bitstream, encoding each of the plurality of digital still images as a digital image file; and recording the single MPEG bitstream and the plurality of digital image files on the recordable optical disc.

According to another aspect of the invention, there is provided a method of generating a multimedia digital graphics album. The method comprises the steps of selecting multimedia material, the multimedia material comprised of at least one audio clip from an audio database, at least one digital still image from an image database, and at least one video clip from a video database; downloading the multimedia material; downsampling the multimedia material; providing user annotated material; generating a composite image of the multimedia material and user annotated material; encoding the composite image to provide an MPEG file; encoding the digital still image to provide a digital image file; creating a disc image comprising the MPEG file and the digital image file; and creating a multimedia enabled disc comprised of the disc image.

The present invention provides a system and method for the authoring of a multimedia digital graphics album which can be played on a variety of consumer equipment, including consumer audiovisual equipment and a personal computer. The present invention also provides a system and method for authoring a multimedia enabled disc comprising PC-based software applications and/or digital images, and comprising a multimedia digital graphics album which can be played on a variety of consumer equipment.

The foregoing and other objects, features, and advantages of the invention will be apparent from the following more particular description of the preferred embodiments of the invention, as illustrated in the accompanying drawings.
FIGS. 1a and 1b show flow diagrams of methods in accordance with the present invention.
FIG. 2 shows a system in accordance with the present invention.
FIG. 3 shows a flow diagram of a method in accordance with the present invention when a background image comprises the digital graphics album.
FIG. 4 shows a flow diagram of a method in accordance with the present invention when a video clip comprises the digital graphics album.
FIG. 5 shows a flow diagram of a method in accordance with the present invention when a video clip is transcoded.
FIG. 6 shows the disc structure.
FIG. 7 shows a track of the disc structure of FIG. 7.
FIG. 8 shows the storage to provide a PictureCD compatible directory structure.
FIG. 9 shows a flow diagram of a method in accordance with the present invention wherein the multimedia material of the digital graphics album comprises a plurality of images, at least one background image, at least one audio clip, at least one video clip, at least one textual /graphic material, and at least one annotation by the user.
FIG. 10 shows an MPEG encoder.

The following is a detailed description of the preferred embodiments of the invention, reference being made to the drawings in which the same reference numerals identify the same elements of structure in each of the several figures.

The term multimedia refers to the inclusion or involving of several media. Thus, multimedia material comprises a plurality of media material, and is intended to provide a digital graphics album with a rich and full context and presentation, and expand a viewer's enjoyment when viewing such an album. Such multimedia material can include, but is not limited to images, audio, video, and any combination thereof.

The present invention provides a system and method for the authoring of a multimedia digital graphics album which can be played on a variety of consumer equipment, including consumer audiovisual equipment and a personal computer. The present invention also provides a system and method for authoring a multimedia enabled disc comprising computer-based content (such as a personal computer) as well as a multimedia digital graphics album. For example, the computer-based content of the disc may comprise the original images/video/audio of the album (i.e., the original content of the album). If the original content is disposed on the same disc as the album, the original content can be readily shared, transferred, viewed, printed, emailed, and/or used in a website. By way of illustration, after the viewing of the album on consumer equipment, a viewer may desire to obtain a print of one of the images viewed in the album. If the original content is disposed on the disc, the viewer can readily obtain the desired image by using the disc with a personal computer.

Similarly, the computer-based content of the disc may comprise a software application, such as a computer game. Thus, a single multimedia disc may comprise both the software application (for playing on a PC) and the multimedia digital graphics album (for playing in consumer equipment)..

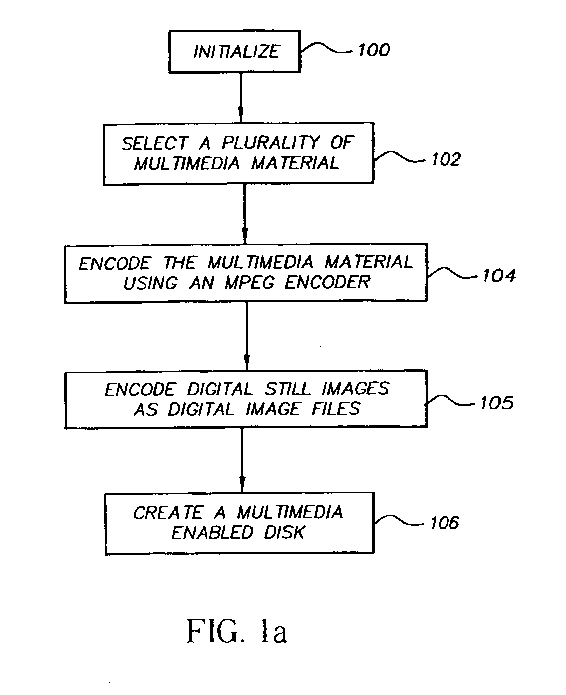

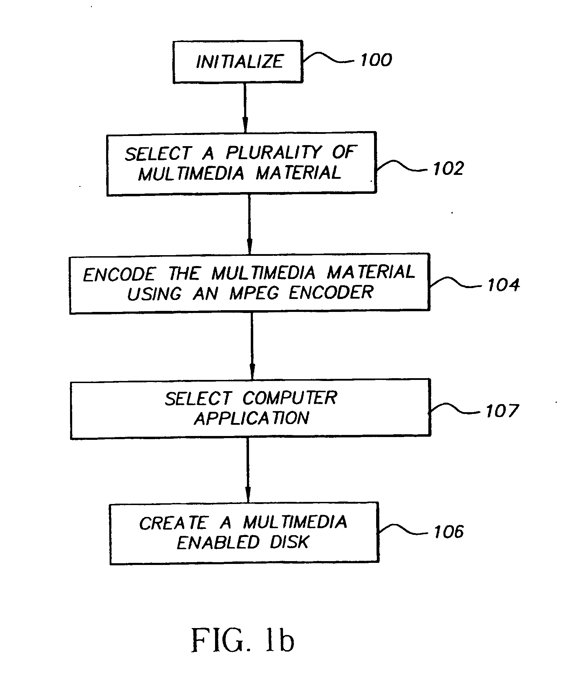

Figures 1a and 1b provide flow diagrams of methods in accordance with the present invention for the authoring of a multimedia enabled disc comprising computer-based content and a multimedia digital graphics album. As discussed above, the computer-based content can include original content, digital images which are not employed in the album, and/or a computer application.

For the flow diagram of Figure 1a, the computer-based content of the disc comprises at least one digital image employed in the multimedia digital graphics album. As seen in Figure 1a at step 100, the method is initialized. The multimedia material is selected (step 102) to generate the multimedia digital graphics album. Once selected, the multimedia material is encoded using an MPEG encoder (step 104). At step 105, digital still images employed in the multimedia material are encoded as digital image files, for example as a JPEG digital image file. A multimedia enabled disc is created (step 106). Steps 100-106 are more particularly described below.

For the flow diagram of Figure 1b, the computer-based content of the disc comprises a computer application. As seen in Figure 1b at step 100, the method is initialized. The multimedia material is selected (step 102). Once selected, the multimedia material is encoded using an MPEG encoder (step 104). At step 107, the computer application is selected. The multimedia enabled disc is created (step 106). Steps 100-107 are more particularly described below.

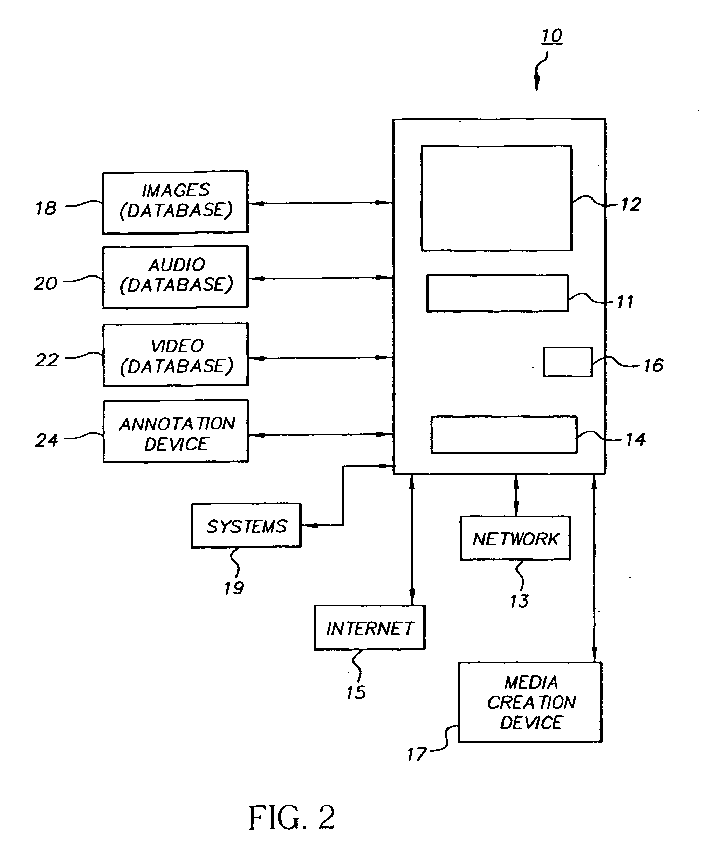

A system 10 in accordance with the present invention is illustrated in Figure 2. System 10 comprises a processing unit 11 and an input device 12 for communicating with the user. Preferably, input device 12 is a screen or monitor having a touch screen interface, though alternatively, a keyboard 14 or other input device (such as a mouse or track ball) may be used by the user. System 10 can be a stand-alone system or network connected 13. Further, the system can be located within a home or located outside a home, such as at a retail store, professional photo studio, or other business venue. If located within a home, system 10 can be comprised of a home personal computer. If located outside of the home, system 10 could be comprised of a kiosk such as a Kodak Picture Maker or the like. If network connected, the connections may be disposed within or outside processing unit 11. Connections to the Internet 15 may be desirable as would connections to other systems 19, such as to a photofinisher or a kiosk such as a Kodak Picture Maker. The multimedia material can include digital images, audio, and video, either taken alone or in any combination. Therefore, system 10 may include an input port 16 to provide/acquire digital images, audio, and video. Examples of input port 16 include a CD drive, a DVD-ROM drive, a flash card or memory card reader, a floppy disk drive, a microphone, and the like. System 10 further includes a media creation device 17 for producing a recordable optical disc such as a CD/DVD writer for the creation of the multimedia enabled disc at step 106.

Referring now to Figures 1a, 1b, and 2, at step 100 the method for creating a multimedia enabled disc is initialized. The initialization includes the launching of the authoring application in a graphics user interface (GUI) based operating system.

At step 102, a plurality of multimedia material, including a plurality of digital still images, is selected for the inclusion in the multimedia digital graphics album. Techniques have been disclosed for searching and selecting digital graphical materials. US Patent No. 5,493,677 to Balogh et al., entitled "GENERATING, ARCHIVING, AND RETRIEVAL OF DIGITAL IMAGES WITH EVOKED SUGGESTION-SET CAPTIONS AND NATURAL LANGUAGE INTERFACE", incorporated herein by reference, is directed to archiving and retrieving of images, such as digitized photographs, works of art, or graphic illustrations, by use of a natural language such as English.

The images may be provided from various sources, represented in Figure 2 as images 18. Such images could be taken with a digital camera, that is, digital still images. Alternatively, a digital still image can be acquired from an image taken with photographic film wherein the image is printed, scanned and converted to digital format. Such digital still images could be stored on a floppy disk, compact disc, memory card, or flash card. System 10 may utilize input port 16 as a means to input the digital still images. Images 18 of system 10 could include an image database comprised of images which are theme-specific, for example scenes from a wedding, birthday party, baby birth, and graduation. The database could also comprise images of a regional interest, for example, scenery of popular tourist attractions, national monuments, national parks, and historic sites. Further, images can comprise cartoon characters, animations, and graphical art. Similarly, the images may be selected from other sources available by means of the Internet, network, or other systems.

Input formats for images 18 include BMP, DCS, DIB, EXIF, FlashPix, IMPS, JPEG, JPEG 2000, PhotoCD, PPM, TIFF, and Raw image formats.

A background image might be desired. That is, a background image might be desired for a title page, index sheet, and/or for bordering/framing the other images, similar to how a wallpapered wall borders/frames a picture hanging on the wall. As with the input formats for digital still images, the input formats for the background image include BMP, DCS, DIB, EXIF, FlashPix, IMPS, JPEG, JPEG 2000, PhotoCD, PPM, TIFF, and Raw image formats.

Audio material may also be included, and is represented in Figure 2 as audio 20. As with images 18, audio 20 can be selected for various sources. For example, a system in accordance with the present invention may include an audio database having a plurality of audio clips with different genres such as light music, classical, rock, and theme-specific, e.g., music suitable for wedding, birthday party, baby birth, and graduation. System 10 may utilize input port 16 to provide means to permit the input of audio in digital form, for example, from a memory card, flash card, or other similar device. Such an input port allows a user to provide personally composed music compositions. The audio material may be selected from other sources available by means of the Internet, network, or other systems.

In addition to music, the audio database may comprise voice clips. For example, quotes from well-known novels, plays, or movies, and voices from well-known personalities such as actors, actresses, and politicians. Using input port 16, a user may provide personal voice clips. For example, if input port 16 comprised a microphone, personal voice clips could be recorded. This feature may be used when a user desires to annotate their images using a digital camera. As such, each image will include an associated speech file (e.g., a .wav file). A resulting multimedia digital graphics album having this feature would be similar to or have the feeling of a narrated slide show.

Input formats for audio include Wave file, MP3, Music CD audio, Apple/SGI formats (.AIFF, .AIF), Sun audio (.AU), and Creative Lab format (.VOC).

Video material may also be included. The video can be selected from various sources, represented in Figure 2 as video 22. For example, system 10 in accordance with the present invention may include a video database. The database could comprise a plurality of video clips which are theme-specific, for example scenes from a wedding, birthday party, baby birth, and graduation. The input of video might be accomplished using input port 16. For example, from a floppy disk, memory card, flash card, or other similar device. Such an input port allows a user to provide personally composed video compositions. The video images may be selected from other sources available by means of the Internet, network, or other systems.

The video could be provided as a moving background, and may or may not be accompanied by audio. Alternatively, the video can be comprised of a plurality of still images, and may or may not be accompanied by audio.

Input formats for video include MPEG-1, MPEG-2, MPEG-4, H.261, H.262, H.263, CCIR 601 (digital video standard), AVI (MS Windows media format), Quicktime, DV (from digital video camcorders), and real video (Real Network).

An additional feature of the system is the inclusion of an annotation device 24. That is, a device for text annotation in real time. The annotations can be included as part of a title or for captioning of the multimedia digital graphics album. For example, for speech input, annotation device 24 can comprise a microphone and a built-in speech-to-text engine which converts the speech into text. Such an annotation device preferably includes an interface (e.g. a keyboard) to allow the user to make corrections.

The databases (for images, audio, or video) may be an existing database comprised of stock images, or a private database. A stock database generally requires the user to pay a copyright fee for access to the graphical materials, and perhaps a basic subscription fee might be imposed.

Once the plurality of multimedia material has been selected at step 102, the selected multimedia material is encoded using an MPEG encoder at step 104 thereby generating the multimedia digital graphics album which can be viewed by various consumer equipment, such as a VCD, SVCD, or DVD player.

In Figure 1a, the digital still images which where selected in step 102 (i.e., as part of the multimedia material) are also encoded, at step 105, as separate digital image files, for example as JPEG files. The encoding of the digital still images at step 105 enables the digital image files to be used by a computer. For example, these files would be viewed, transferred, and/or printed. Preferably, the digital still images remain as high resolution images, such as when the image was originally captured in a digital camera or first scanned by a photofinisher. Accordingly, step 105 provides the computer-based content of the disc.

In Figure 1b, the computer-based content for the disc is obtained at step 107 wherein the computer application is selected.

MPEG (Moving Picture Experts Group) is an ISO committee responsible for defining various video specifications. Well-known encoding standards from MPEG include MPEG-1, MPEG-2, and MPEG-4.

MPEG-1 is an audiovisual encoding standard (ISO 11172) for compressing digital video at low bit rates. MPEG-2 is designed for broadcast television and other applications using interlaced images. These MPEG standards are described in "Coding of moving pictures and associated audio for digital storage media at up to 1.5 Mb/s: video", ISO/IEC 11172-2, MPEG-1 Video International Standard, 1993, and "Information technology - Generic coding of moving pictures and associated audio information: Video", ISO/IEC 13818-2, MPEG-2 Video International Standard, 1996.

The selection of the MPEG standard (i.e., MPEG-1 or MPEG-2) used to encode the selected multimedia material depends on the multimedia enabled disc which is to be created, as discussed below.

The MPEG encoding can be implemented using a software encoder application or a hardware encoder board. The implementation method selected may vary by cost, speed, and image quality, and accordingly, the implementation method selected will depend on the requirements of the multimedia-enabled disc. For example, MPEG-1 encoding generally demands less computational resources than MPEG-2. Software encoding has become available in recent years as a result of improved performance of personal computers. With the level of encoding required (i.e., still images of several seconds each), software encoding may be preferred as it may be more cost effective to implement.

Once encoded, the multimedia enabled disc is created at step 106. Writers/generators, such as for CD-R and DVD-recordable discs, are commercially available devices, and therefore referenced in Figure 2 as media creation device 17. Such devices can be purchased for home use. To enable a fast writing process, high-speed writers (better than 4X) are preferred.

Various multimedia enabled discs may be created at step 106, for example, a VCD (video compact disc), a SVCD (super video compact disc), or a DVD (digital video disc). Players for each of these examples of a multimedia enabled disc are available as consumer audiovisual equipment. VCD was developed by the VCD Consortium (including Philips, Sony, Matsushita, and JVC), and is based on MPEG-1 encoding. SVCD is based on MPEG-2 encoding, and was developed by China's Ministry of Information Industry (MII) in collaboration with the VCD Consortium, and has evolved into an international standard IEC 62107. DVD is also based on MPEG-2 encoding, and was developed by the DVD Forum, comprising approximately 220 member companies. Both VCD and SVCD use CD media, whereas DVD uses DVD media. VCD provides an image resolution of 352x240 (NTSC), or 352x288 (PAL) and can hold up to 74 minutes of audiovisual content. SVCD provides an image resolution of 480x480 (NTSC), or 480x576 (PAL), and can hold from 30-74 minutes of audiovisual content, depending on the compression bit rate. DVD provides an image resolution of 720x480 (NTSC), or 720x576 (PAL), and can hold up to 133 minutes of audiovisual content.

Accordingly, when a VCD is desired, a VCD image is created and a final VCD is burned (using media creation device 17), preferably along with a pre-defined menu. Similarly, when a SVCD is desired, a SVCD image is created and a final SVCD is burned (using media creation device 17), preferably along with a pre-defined menu. Likewise, when a DVD is desired, a DVD image is created and a final DVD is generated (using media creation device 17), preferably along with a pre-defined menu.

As noted above, either MPEG-1 or MPEG-2 encoding may be preferred dependent on whether a VCD, a SVCD, or a DVD is the desired output. For example, MPEG-1 is used for VCD, and while MPEG-2 is used for SVCD or DVD.

The multimedia enabled disc can comprise a plurality of multimedia material, and more particularly, a plurality of combinations of multimedia material. For example:
(1) images; no background image; no audio; no video;
(2) images; a background image; no audio and no video;
(2) images; no background image; audio; no video;
(3) images; no background image; no audio; video;
(4) images; background image; audio; no video;
(5) images; background image; audio; video; and
(6) images; no background image; audio; video;
wherein the audio may be comprised of voice only (for example, per image), music only, or a combination thereof.

Other combinations will be known to those skilled in the art. Depending on the combination of multimedia material selected for the generation of the multimedia enabled disc, further steps may be required to format/prepare the multimedia material to provide a quality digital multimedia graphics album.

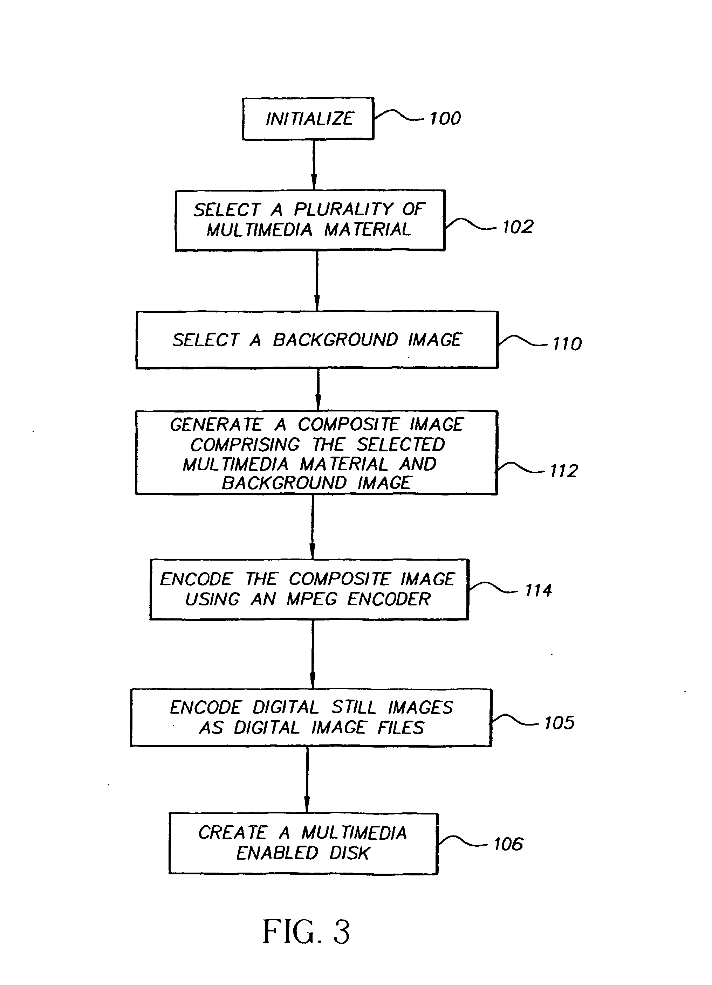

For example, if a background image is desired, any images selected at step 102 (i.e., the selection of the multimedia material) need to be composited with the background image prior to the MPEG encoding step. Figure 3 shows a method in accordance with the present invention which is suitable for when a background image is to be included in the multimedia digital graphics album. As shown in Figure 3, the method is initialized (step 100) and the plurality of multimedia material, including a plurality of digital still images, is selected (step 102). Further, a background image is also selected (step 110). A composite image is generated at step 112, with the composite image comprising the multimedia material and the background image. The composite image is encoded using the MPEG encoder (step 114), each of a plurality of digital still images are also encoded as digital image files (step 105), and the multimedia enabled disc is generated (step 106) by recording the MPEG encoded composite image and digital image files on the disc. (Step 105 is replaced with step 107 is a software application is to be employed rather than digital still images.)

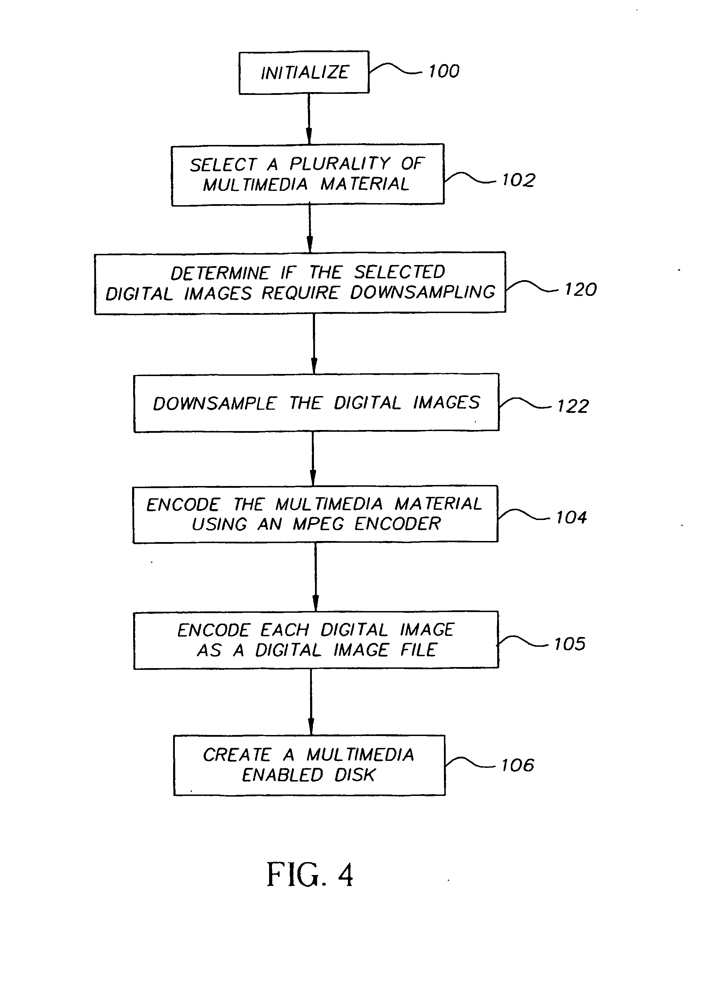

For some high resolution digital still images, it may be necessary to downsample the digital still images prior to MPEG encoding. Figure 4 shows a method in accordance with the present invention which is suitable for when high resolution images are used as input to the multimedia digital graphics album. As shown in Figure 4, the method is initialized (step 100) and the plurality of multimedia material is selected (102), which includes selecting a plurality of digital still images. Further, it is determined whether the selected digital still images require downsampling (step 120) in order provide an appropriately sized image for incorporation into the MPEG bitstream. If required, the digital still images are downsampled (step 122) prior to the multimedia material being MPEG encoded (step 104). The downsampling preferably includes low pass filtering followed by decimation. The original high resolution digital still images are encoded as separate high resolution digital image files (step 105). The multimedia enabled disk is created (step 106) by recording the MPEG bitstream and encoded digital image files on the recordable disc. (Step 105 is replaced with step 107 is a software application is to be employed rather than digital still images.)

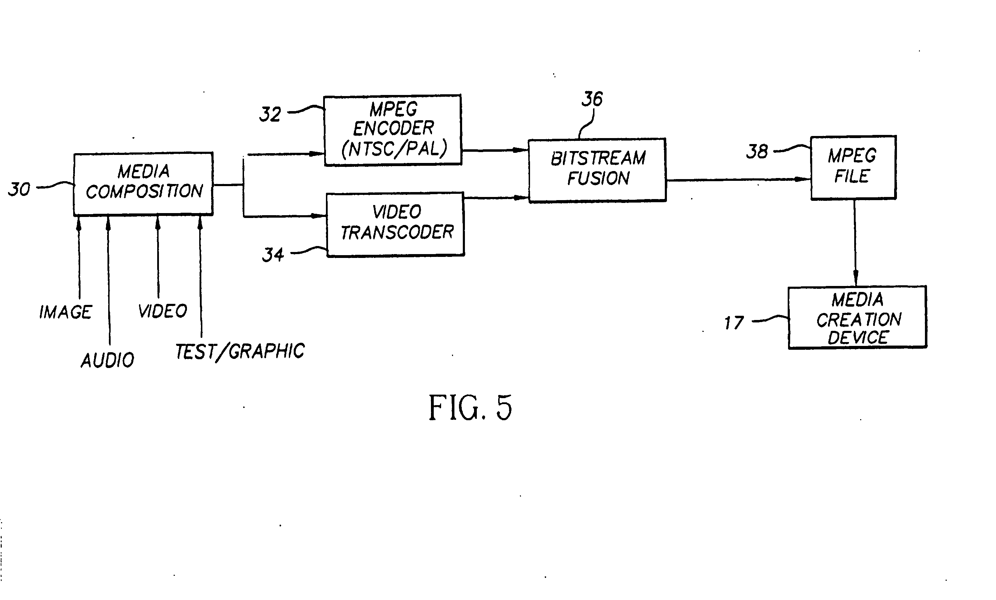

Further, video which is selected as part of the multimedia material (step 102) could already be provided in a MPEG format, but the resolution of the selected video might not match the resolution required for the output MPEG bitstream. In this instance, the video is transcoded using a video transcoder. Figure 5 shows a flow diagram illustrating the incorporation of a video transcoder 34. As illustrated, rather than directing the video through an MPEG encoder 32, the selected video is directed by media composition 30 through video transcoder 34. Once transcoded, the video bitstream and MPEG bitstream are re-united and concatenated in bitstream fusion 36 to create a single MPEG file 38 which can be recorded using media creation device 17.

Depending on the multimedia enabled disc to be created, video transcoder 34 will transcode the input video into the appropriate format with the right resolution and bit rate. For example, if the multimedia enabled disc to be created is VCD, MPEG-1 video needs to be encoded at 1.152 Mbps constant bit rate, the image resolution must be 352x240 at 29.97 Hz (NTSC) or 352x288 at 25 Hz (PAL). Also, the MPEG-1 audio needs to be encoded at 224 Kbps using layer 2 encoding scheme. The requirement will be different for DVD, which is based on the MPEG-2 encoding.

Different transcoding techniques have been disclosed in research literature. Examples of references for the design and implementation of video transcoder include: "Architecture for MPEG compressed domain bitstream scaling", by Sun et al., IEEE Trans. Circuits and Systems for Video Technology, Vol 6, pp. 191-199, April 1996; "Transcoding of MPEG bitstreams", by Keesman et al., Signal Processing: Image Communications, Vol. 8, pp. 481-500, September 1996.

Other MPEG files may need to be joined (e.g. concatenated) to provide a final MPEG file for creation of the multimedia enabled disc. Such joining is required when several MPEG bitstreams are to be included as part of the multimedia enabled disc. For example, if multiple digital graphics albums are to be merged into a single album, the MPEG bitstreams would be concatenated consecutively in bitstream fusion 36. A single MPEG file would then be written into one single track of the disc structure using media creation device 17. Alternatively, multiple MPEG files can be used for creation of the multimedia enabled disc. In this instance, each of the MPEG files will be written into a separate track of the disc structure. Each track will correspond to a separate event or album in the disc.

The multimedia enabled disc is preferably configured as a normal compact disc so that it can be viewed and manipulated on a personal computer as well as being used as a VCD, SVCD, or DVD. Accordingly, for a VCD, a normal CD-ROM file structure with high-resolution images and other software applications (for example, as provided with a Kodak Picture CD) is included as in a standard compact disc so that the digital still images included in the MPEG bitstream can also be accessed as JPEG files so that they can be viewed and manipulated on a personal computer.

Creation of the multimedia enabled disc (step 106) includes writing the normal disc-ROM structure onto the optical disc. For example, for a VCD, the normal CD-ROM structure is written onto the recordable optical disc. For a DVD, the DVD-ROM structure is written.

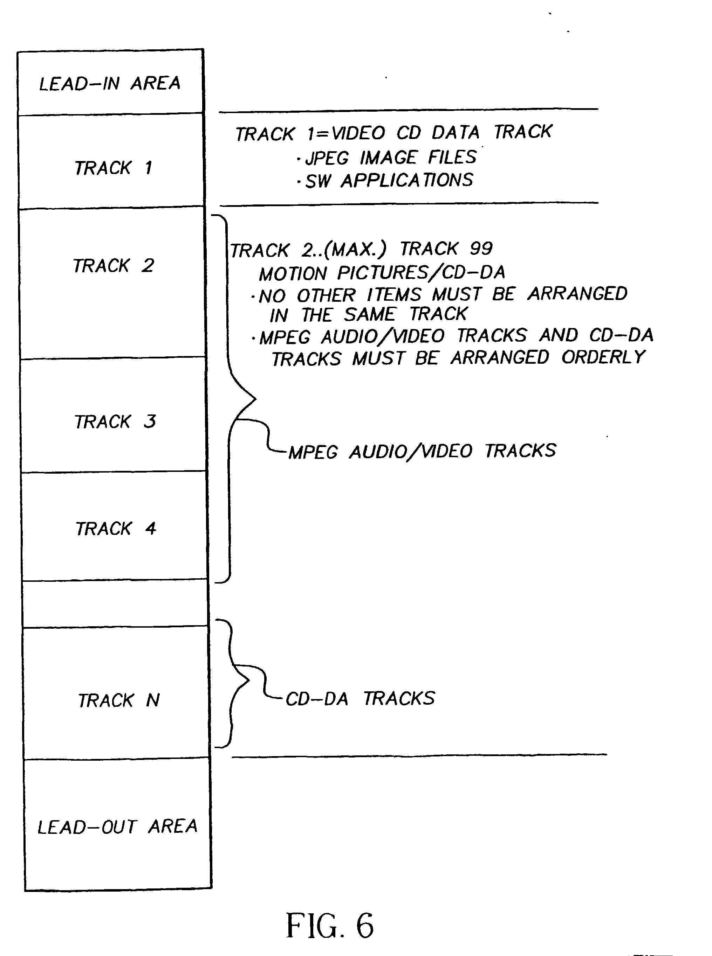

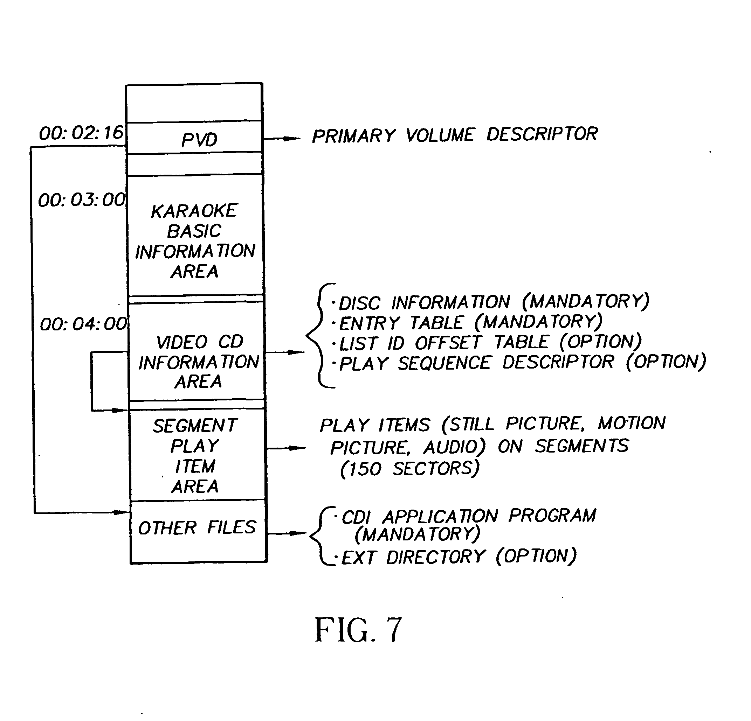

The high resolution digital image files encoded as digital image files, preferably encoded as JPEG digital image files, are written into Track 1 of the disc structure, shown in Figure 6 as a VCD disc structure. In accordance with the disc standard, Track 1 area contains the disc information area, the ISO 9660 (CD-ROM) file structure, and other options such as Segment Play Item area. A more detailed breakdown of the information recorded in Track 1 is depicted in Figure 7.

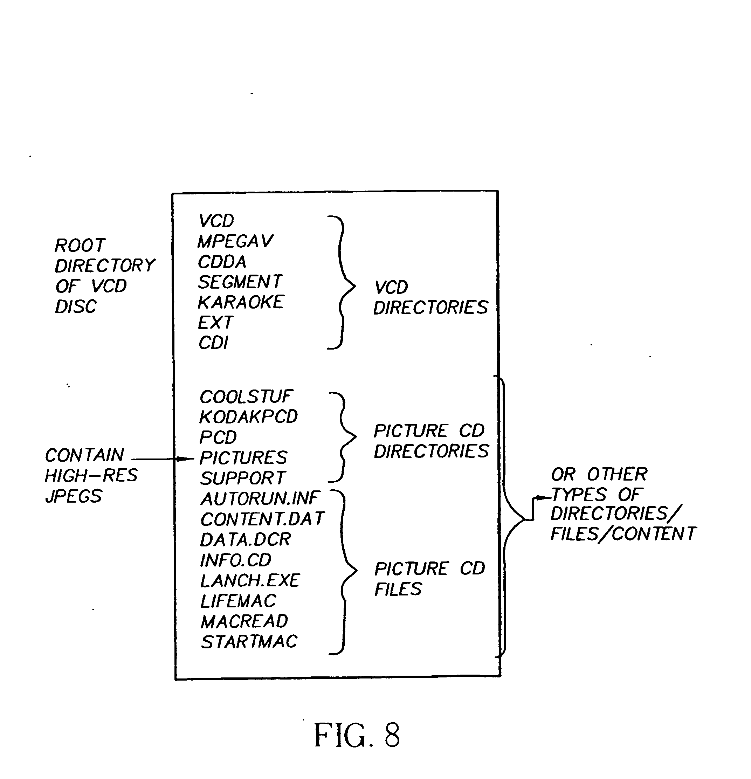

As discussed above, the encoding of the digital still images of the original content at step 105 enables the digital image files to be used by various consumer equipment, such as personal computer, and by image editing software applications. Figure 8 shows an example of how the digital image files (i.e., the JPEG digital image files) and/or software application are stored for a VCD. A root directory structure of a VCD is illustrated. This directory provides a Kodak PictureCD compatible directory structure. The digital image files are stored in the "Pictures" directory shown in Figure 8. Other software applications, such as for viewing and editing these digital image files, can be stored, for example, in the "Coolstuf" directory or other Picture CD directory. As a result, the multimedia enabled disc created in step 106 provides a Kodak Picture CD compatible disc, since the digital still images included in the MPEG bitstream for the multimedia digital graphics album are also stored separately as Picture CD compatible JPEG image files.

Alternatively, other files and software applications can be stored in place of the Picture CD content.

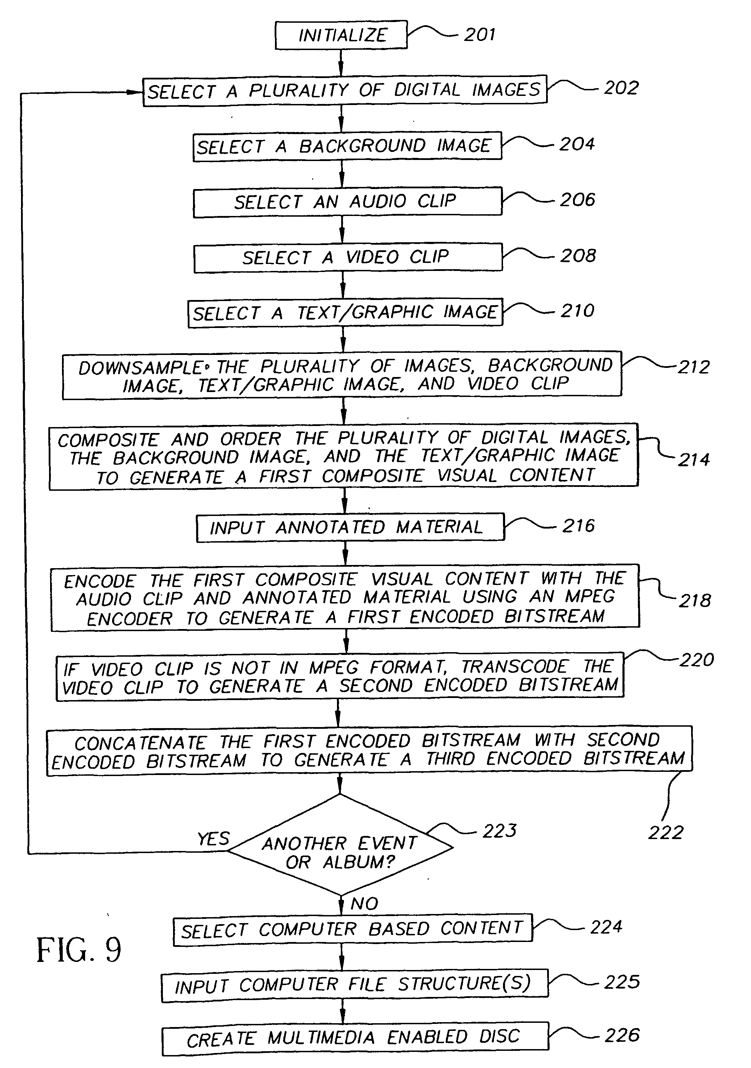

Figure 9 provides a flow diagram of a method in accordance with the present invention wherein the multimedia material of the digital graphics album comprises a plurality of images, at least one background image, at least one audio clip, at least one video clip, at least one textual /graphic material, and at least one annotation by the user.

As illustrated in Figure 9, at step 201, the system 10 for creating a multimedia digital graphics album is initialized. The initialization includes the launching of the authoring application in a graphics user interface (GUI) based operating system. At step 202, the user selects, using input device 12 or keyboard 14, a plurality of digital images for inclusion in the multimedia digital graphics album. At step 204, the user selects using the input device 12 or the keyboard 14, a background image. Similarly, the user selects one or more audio clips (step 206), one or more video clips (step 208), and at least one text or graphic image (step 210). System 10 then downsamples the plurality of images (step 212), including the background image, text/graphic image, and video clip. At step 214, system 10 composites and orders the plurality of downsampled digital images, the background image, and the text/graphic image to generate a first composite visual content. If annotated material is to be included, the user inputs annotated material using annotation device 24 (step 216) using, for example, a microphone or text input. System 10 encodes the first composite visual content with the audio clip and annotated material using an MPEG encoder to generate a first encoded bitstream (step 218). At step 220, if a video clip is not in MPEG format, system 10 transcodes the video clip to generate a second encoded bitstream. System 10 then concatenates the first encoded bitstream with the second encoded bitstream to generate a third encoded bitstream (step 222). If another event or album is to be constructed, (step 223), steps 202 through 222 are repeated. If no further events/albums are to be constructed, at step 224 the computer-based content is selected. If the selected content is digital still images, these images are encoded at step 224 as digital image files. At step 225, the computer-ROM file structures is determined. At step 226, system 10 creates a multimedia enabled disc including the computer-ROM file structures, computer-based content, and the final MPEG bitstream (which may be the third encoded bitstream of step 222 or a plurality of bitstreams if multiple events/albums were constructed at step 223).

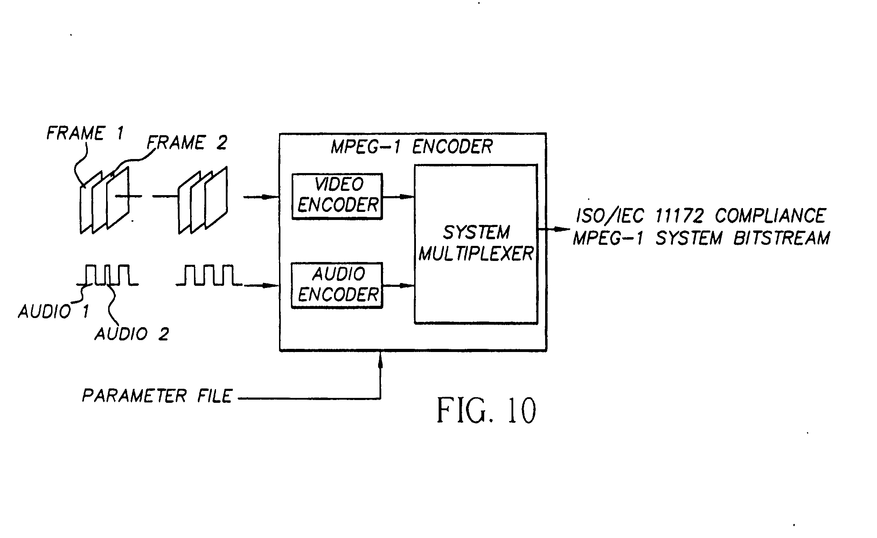

Figure 10 depicts MPEG encoder 32 in more detail. As illustrated in Figure 11, MPEG encoder 32 is composed of three sections: 1) video encoder, 2) audio encoder, and 3) system multiplexer. The encoding step includes inputting the image/video sequence in a frame by frame sequential order to the video encoder, and inputting the audio data that corresponds to the image/video sequence to the audio encoder. Accordingly, the audio is preferably corresponded image-by-image. A parameter file is also sent to encoder 32 from media composition 30, indicating for example the display duration for each of the digital still images of the input sequence. The encoded video and audio bitstreams are then multiplexed to form a ISO/IEC 11171 compliance MPEG system bitstream.

In MPEG-1 and MPEG-2 video encoding, each video frame is divided into an array of macroblocks, each 16,16 pixels in size and comprising 4 blocks of Y (luminance), 1 block each of U and V (color information). Therefore, the color information has half the horizontal and vertical resolution of the luminance information. For the constrained parameter systems, used for Video CD, there are a maximum of 396 macroblocks per frame. The Y, U, and V information in each macroblock is compressed, preferably using Discrete Cosine Transform (DCT) encoding and motion compensation.

An index or title page can be included in the multimedia digital graphics album. This can be accomplished by first selecting a title/index page background image, inputting text to describe the multimedia album, or inputting text to indicate the title for each MPEG files (tracks) created.

The digital still images to be encoded in a digital image file (at step 105) need not be the same digital still images selected as part of the multimedia material at step 102. Rather, the image or images comprising the computer-based content may be an image or plurality of images separate and distinct from any image employed in the digital graphics album. Accordingly, a method of providing an optical disc would then comprise the steps of selecting a first plurality of digital still images; selecting an audio clip; encoding the first plurality of digital still images and the audio clip as a single MPEG bitstream; selecting a second plurality of digital still images; encoding each of the second plurality of digital still images as a digital image file, each of the plurality of digital images files being a JPEG file; and recording the single MPEG bitstream and the plurality of digital image files on the optical disc.

Thus, the present invention discloses a method and a system to efficiently author and present digital graphics albums comprised of multimedia material. The multimedia enabled disc created by the present invention can be displayed and played, in addition to a personal computers, in consumer audiovisual equipment such as a VCD player, SVCD player, and DVD player. Features of the invention include: (1) automated operation with user selectable input; (2) easy association of audiovideo content and graphical material to digital images to create a multimedia digital graphics album; (3) viewing using consumer audiovisual equipment such as VCD, SVCD, and DVD players, while maintaining compatibility to a computer; (4) ready incorporation of existing photo products (such as Picture CD from Eastman Kodak Company) as a result of incorporating the computer file structure; (5) ready incorporation into a photofinishing process; and (6) utilization of consumer audio captured in digital cameras.

The present invention provides a means to improve the overall artistic presentation of a digital image. The efficient authoring of a multimedia digital graphics album enables the playback in popular consumer equipment such as VCD, SVCD, and DVD players. This method and system would be used during the creation of a multimedia-enabled Kodak Picture CD for consumers. The method and system will greatly enhance the value of the current Kodak Picture CD, as it provides an alternate path and a new experience to view digital photographs in consumer's living room rather than on a PC.

## Claims

1. A method of recording information on a recordable optical disc, comprising:
selecting a plurality of digital still images;
selecting an audio clip;
encoding the plurality of digital still images and the audio clip as a single MPEG bitstream;
encoding each of the plurality of digital still images as a digital image file; and
recording the single MPEG bitstream and the plurality of digital image files on the recordable optical disc.

2. The method of Claim 1, wherein each of the plurality of digital images files is a JPEG file.

3. The method of Claim 1, further comprising the steps of:
selecting a software application; and
recording the software application on the recordable optical disc.

4. The method of Claim 1, further comprising the steps of:
defining a computer file directory structure; and
recording the digital image files according to the computer file structure on the recordable optical disc.

5. The method of Claim 1, further including the steps of:
providing user annotated material and the user annotated material is encoded with the plurality of digital still images and the audio clip as a single MPEG bitstream.

## Patentansprüche

1. Verfahren zur Aufzeichnung von Informationen auf einer aufnahmefähigen optischen Disk, das folgende Schritte umfasst:
Auswählen einer Vielzahl von digitalen Standbildern;
Auswählen einer Tonaufnahme;
Codieren der Vielzahl von digitalen Standbildern und der Tonaufnahme in Form eines einzelnen MPEG-Bitstroms;
Codieren jedes digitalen Standbildes aus der Vielzahl der digitalen Standbilder als digitae Bilddatei; und
Aufzeichnen des einzelnen MPEG-Bitstroms und der Vielzahl der digitalen Bilddateien auf der aufnahmefähigen optischen Disk.

2. Verfahren nach Anspruch 1, worin jede digitale Bilddatei aus der Vielzahl der digitalen Bilddateien eine JPEG-Datei ist.

3. Verfahren nach Anspruch 1, das zudem folgende Schritte umfasst:
Auswählen einer Softwareanwendung; und
Aufzeichnen der Softwareanwendung auf der aufnahmefähigen optischen Disk.

4. Verfahren nach Anspruch 1, das zudem folgende Schritte umfasst:
Definieren einer Computer-Dateiverzeichnisstruktur; und
Aufzeichnen der digitalen Bilddateien gemäß der Computer-Dateistruktur auf der aufnahmefähigen optischen Disk.

5. Verfahren nach Anspruch 1, das zudem folgende Schritte umfasst:
Bereitstellen benutzerseitig kommentierten Materials und Codieren des benutzerseitig kommentierten Materials mit der Vielzahl von digitalen Standbildern und der Tonaufnahme als einzelner MPEG-Bitstrom.

## Revendications

1. Procédé pour enregistrer des informations sur un disque optique enregistrable, comprenant :
la sélection d'une pluralité d'images numériques fixes ;
la sélection d'une séquence audio ;
le codage de la pluralité d'images numériques fixes et de la séquence audio sous forme d'un seul train de bits MPEG ;
le codage de chacune des images de la pluralité d'images numériques fixes sous forme d'un fichier d'image numérique ; et
l'enregistrement du train de bits MPEG unique et de la pluralité de fichiers d'images numériques sur le disque optique enregistrable.

2. Procédé selon la revendication 1, dans lequel chacun des fichiers de la pluralité de fichiers d'images numériques est un fichier JPEG.

3. Procédé selon la revendication 1, comprenant aussi les étapes de :
sélection d'une application logicielle ; et
enregistrement de l'application logicielle sur le disque optique enregistrable.

4. Procédé selon la revendication 1, comprenant aussi les étapes de :
définition d'une structure de répertoire de fichiers informatiques ; et
enregistrement des fichiers d'images numériques selon la structure de fichiers informatiques sur le disque optique enregistrable.

5. Procédé selon la revendication 1, comprenant aussi les étapes de :
fourniture d'un matériau annoté par l'utilisateur et codage du matériau annoté par l'utilisateur avec la pluralité d'images numériques fixes et la séquence audio sous forme d'un seul train de bits MPEG.
